(19) Europäisches Patentamt
European Patent Office
Office européen des brevets

(11) **EP 3 120 989 B1**

(12) **EUROPEAN PATENT SPECIFICATION**

(45) Date of publication and mention
of the grant of the patent:
**18.04.2018 Bulletin 2018/16**

(51) Int Cl.:
*B29C 47/00* *(2006.01)*     *B29C 47/06* *(2006.01)*
*B29C 55/12* *(2006.01)*     *B29C 55/16* *(2006.01)*
*B29C 47/88* *(2006.01)*     *B32B 27/08* *(2006.01)*
*B32B 27/28* *(2006.01)*     *B32B 27/32* *(2006.01)*
*B65D 27/04* *(2006.01)*     *B65D 1/00* *(2006.01)*
*B29K 23/00* *(2006.01)*

(21) Application number: **16178591.0**

(22) Date of filing: **08.07.2016**

(54) **POLYMER FILMS**

POLYMERFILME

FILMS POLYMÈRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.07.2015 IT UB20152446**

(43) Date of publication of application:
**25.01.2017 Bulletin 2017/04**

(73) Proprietor: **Irplast S.p.A.**
**50053 Empoli (FI) (IT)**

(72) Inventors:
• **DI COSTANZO, Carmelo**
**66034 Lanciano (Chieti) (IT)**

• **MONTAGANO, Angelo**
**66054 Vasto (Chieti) (IT)**
• **PIERSE, Michael**
**15067 Novi Ligure (Alessandria) (IT)**
• **TROILO, Roberto**
**66100 Chieti (IT)**

(74) Representative: **Rossetti, Elena**
**BUGNION S.p.A.**
**Via di Corticella 87**
**40128 Bologna (IT)**

(56) References cited:
**EP-A1- 2 599 628     EP-A2- 1 584 466
US-A- 5 496 600**

**Description**

The present invention relates to polyolefin films for making anti-reflective transparent windows for envelopes, postal products, etc.

More particularly, the present invention relates to multi-layer polypropylene-based films for making anti-reflective transparent windows for envelopes, postal products, etc. characterised in that it has a percentage of production waste lower than 0.002%, preferably lower than 0.001 %.

Polymeric films used for this application are known wherein the polymeric film is based on polystyrene. See, for example, patent EP2832541. The drawback of these films is that they do not allow a high number of windows for envelopes to be obtained per unit of polymer weight.

In the art polymeric films are also known based on polyolefins which overcome this drawback and allow a higher number of windows for envelopes to be obtained per quantity of polymer used. See, for example, the patent indicated above. The disadvantage of using polyolefin films for this application lies in the fact that the percentage of processing waste is quite high, in the order of 100 to 300 envelopes/ day using an applicator that operates at about 1200 envelopes/minute, since when the polymeric film window is cut it does not produce envelopes that are acceptable on the market.

To overcome this drawback, patent DE 10 2007 048 090 A1 is known, wherein the thickness of the film is less than or equal to 25 $\mu$m in order to be able to substantially eliminate the wastes. Comparative examples show that if this thickness is exceeded, the processing waste levels often become significant. A need was felt for the availability of multi-layer polymeric films based on polyolefins to be used for transparent envelope windows, which led to a substantial reduction or even elimination of waste during the application step, so as to have envelopes that are acceptable on the market.

Moreover, patent EP2599628 discloses a process to obtain a three-layered polyolefin-based film using LISIM® technology, a stretching technology which allows simultaneous stretching of plastic films.

The Applicant unexpectedly and surprisingly found the solution to this technical problem using films such as those defined below.

An object of the present invention is multi-layer polyolefin films for envelope windows comprising at least three layers wherein:

- the central layer (core) comprises one or more polypropylene homopolymers;
- the outer layer of the film on the outer part of the envelope (visible), which forms the anti-reflective layer, is based on copolymers of propylene in a mixture with HDPE, HDPE being between 40 and 50% by weight of the mixture;
- the inner layer, in contact with the contents of the envelope is based on propylene copolymers;

the film is isotropic in relation to shear strength (tear resistance).

In practice, the tear resistance in MD direction and in TD direction and the ratio between these two values (tear resistance in MD / tear resistance in TD) is calculated, which must be comprised between 0.85 and 1.20, preferably between 0.95 and 1.15.

The multi-layer films according to the present invention are thermoplastic. The HDPE comprised between 40 and 50% by weight in the outer layer of the film has a matting effect.

The film according to the present invention may even have a number of layers higher than three, generally 5 or 7 layers etc., wherein the central layer comprises one or more propylene homopolymers in which the quantity of extractables in n-hexane (50°C for two hours) is less than 10%, preferably less than 5%, even more preferably less than 2% by weight, as determined according to standard FDA 177 1520.

Preferably the copolymers of the outer layer are based on propylene with at least another comonomer containing at least one ethylenic unsaturation chosen among ethylene, alpha-olefins, linear or branched when possible, having a number of carbon atoms from 4 to 12, the total quantity of comonomers being comprised between 0.5 and 25% by weight, preferably from 1 to 10% by weight out of the total monomers. The comonomers containing at least one ethylenic unsaturation are for example ethylene, butene, hexene, octene, decene and dodecene. Preferably the comonomer is ethylene.

In general the copolymers contain (% by weight) ethylene <10% preferably 1-8%. The monomer alpha-olefin (% by weight) is comprised between 0 and 10%, preferably 0.5-6%.

Examples of propylene-based copolymers are propylene/ethylene, propylene/ethylene/butene, propylene/butene/ethylene, etc.

The preferred copolymer is the propylene/ethylene copolymer <8%.

The inner layer comprises polypropylene-based copolymers with one or more monomers chosen from ethylene, alpha-olefins, linear or branched when possible, having in the chain a number of carbon atoms ranging from 4 to 12. The quantity of ethylene and alpha-olefins is less than 20%, preferably less than 10% by weight out of the total polymer.

In a preferred embodiment a propylene/ethylene/butene terpolymer is used.

Further comonomers (% in moles) that may be present in the copolymers are cyclopentadiene and terpenes, in molar quantities up to 10%, preferably 0-5%.

Propylene copolymers have a quantity of extractables less than 10% by weight, preferably less than 3%.

The melt flow index of propylene copolymers is preferably comprised between 1 and 30 g/10 min (230°C 10 min load 2.16 kg ASTM D1238).

In a preferred embodiment the film according to the invention is formed by a core of propylene homopolymer, an outer layer formed by a propylene/ethylene copolymer in which ethylene <8% by weight, the complement to 100 being comprised of propylene; an inner layer comprised of a propylene/ethylene/butene terpolymer wherein the quantity of ethylene + butene is less than 10% by weight, the complement to 100 being comprised of propylene.

The outer layer of the film according to the present invention is spread with a glue onto the part in contact with the paper to enable the adhesion of the film to the envelope.

Examples of glues are products on the market called Eukalin 6415 EF, Fuller Swift-Tak 1304, etc.

Both in the inner and in the outer layer of the film, there may be optional components chosen from slip agents and anti-blocking agents; the core may optionally contain anti-static agents and/or polyolefin copolymers etc. The optional components in the inner and outer layer are added by taking away an equal amount of copolymer, whereas in the core an equal amount of homopolymer is taken away.

Generally, the optional components are added in the form of masterbatches wherein the carrier comprises an olefin polymer and the quantity of optional agent is comprised between 1,000 and 5,000 ppm with respect to the total weight of the layer.

Slip agents may be higher aliphatic acid amides, higher aliphatic acid esters, waxes, salts of fatty acids with metals and polydimethylsiloxanes. The quantity is that generally used in films.

Anti-blocking agents may be inorganic compounds such as, for example, silicon dioxide. The quantity is generally comprised between 1,000 and 2,000 ppm with respect to the weight of the layer.

Anti-static agents may be glycerol monostearate, aliphatic tertiary amines with saturated linear chains containing a $C_{10}$-$C_{20}$ aliphatic radical and substituted with $\omega$-hydroxy-($C_1$-$C_4$) alkyl groups. Tertiary amines may be N,N-bis(2-hydroxyethyl)alkylamine containing $C_{10}$-$C_{20}$ alkyl groups, preferably $C_{12}$-$C_{18}$. The quantity of anti-static agent is generally comprised between 1,000 and 2,000 ppm with respect to the weight of the layer.

In the film according to the present invention, preferably in the core, propylene-based olefin copolymers may also be added, for example as indicated above, preferably in a quantity of 10 to 20% by weight, reducing the quantity of homopolymer accordingly. As an alternative, ethylene copolymers may be used with one or more linear or branched alpha-olefins with 3 to 20 carbon atoms, optionally in presence of other comonomers containing more than one double bond in addition to the alpha-olefin bond, conjugated or not, with 4 to 20 carbon atoms or cyclic wherein the ring has 5 or 6 carbon atoms, preferably cycloalkenes, such as vinylcyclohexene, aromatics such as cyclopentadiene. The alpha-olefin and diene monomers may also be chosen from those indicated above, including propylene. The total quantity of comonomers (% in moles) in ethylene copolymers is comprised between 5 and 50%, preferably between 10 and 25%, the number average molecular weight preferably being comprised between 300 and 25,000. The quantity of copolymers (% by weight) in the core preferably varies between 0 and 20% with respect to the quantity of propylene homopolymers of the film or the core, even more preferably between 0 and 3%.

The film according to the present invention is preferably bioriented.

Shear strength isotropic film means that the shear strength (tear resistance) in the MD and in the TD direction is substantially equal.

To obtain shear strength isotropic film according to the present invention, the stretch ratio values in MD (machine direction) are comprised between 5.9 and 8 and in TD (transversal direction) between 5.5 and 8 and such that the following relationship (a) is satisfied:

$$|(ratio(MD) - ratio(TD)| \, / \, (\wedge \, (ratio(MD), ratio(TD)) \; < 13\%$$

i.e. inequality requires the absolute value of the difference between the stretch ratio in MD and the stretch ratio in TD, divided by the minimum value between the stretch ratio in MD and that in TD to be less than 13%.

According to the present invention this definition leads to substantially isotropic film with respect to tear resistance.

This relationship is valid for simultaneous stretching in MD and in TD using a simultaneous stretching machine, preferably the LISIM®.

It is to be noted that this relationship is not valid when sequential stretching is used, i.e. the film is stretched first in MD and then in TD. In fact, in this case, stretching in TD changes the orientation of the polymeric molecules obtained in the first step of sequential stretching in MD.

The films according to the present invention are preferably obtainable by extrusion of polyolefin polymer granules, since the films are wrapped in rolls having very high lengths, even in the order of 20,000 metres. These rolls are commonly known as extruded mother rolls. From these, in a subsequent cutting step, the rolls are obtained to be used to form the windows in the application step to the envelopes, having a width of 120 mm and cut to a length of 65 mm.

The thickness of the multi-layer film is generally comprised between 15 and 40 $\mu$m, preferably >25.5 $\mu$m up to 35 $\mu$m, more preferably 28-33 $\mu$m. The thickness of the central layer varies between 12 and 38 $\mu$m.

The thickness of the inner layer and the outer layer varies in the range between 0.3-4 $\mu$m, preferably 0.5-2.5 $\mu$m. The thickness of the inner layer may be the same or different from the thickness of the outer layer.

The films according to the invention may be obtained using simultaneous stretching technology. LISIM® technology is described in various patents. See, for example, USP 4,853,602 and USP 5,051,225.

The process for obtaining the multi-layer films according to the invention comprises the following steps:

- coextrusion of a multi-layer sheet of the film according to the invention, i.e. of a multi-layer sheet comprising the same layers of the film according to the invention, having a thickness preferably comprised between about 0.5 mm and about 4 mm;
- cooling of the sheet on the surface of a cooled chill roll and immersed in a water bath preferably at a temperature comprised between 5 and 35°C.
- heating of the sheet preferably using infrared radiation units wherein the surface of the IR panels has a temperature comprised between about 100°C and about 500°C;
- stretching and orientation of the sheet and obtaining the multi-layer film with a simultaneous orientation process by gripping the edges of the sheet, which have a higher thickness than the sheet, with a series of grippers/clamps independently guided by linear synchronous induction motors, wherein the assembly of grippers/clamps slides on diverging stretching tracks;
the linear synchronous induction motors are powered with alternating currents whose phases and frequencies are modulated so that the grippers/clamps follow a pre-programmed linear speed to obtain the required stretch ratios in MD;
wherein the MD stretch ratios are a function of the longitudinal linear speed profile and the TD stretch ratios are regulated by the distance (divergence) between the stretching rails;
- the stretching frame used for the film stretching steps comprises one or more sections which are located inside an oven having a temperature comprised between about 150°C and 190°C;
- the longitudinal stretch ratios MD being comprised between 5.9 and 8 and in TD between 5.5 and 8, operating so that the inequality (a) is satisfied,
- final heat setting in TD performed using convergence of the stretching tracks in one or more sections of the
- stretching frame at temperatures of about 130°C-140°C and heat setting in MD obtained by reducing the linear speed of the grippers.

As a first approximation, the stretch ratio in MD can be considered equal to the ratio between the outlet speed of the film from the stretching frame and the inlet speed of the film into the stretching frame. In relation to the set-up of the stretching equipment, this ratio is equivalent to the ratio between the frequency of the alternating current supplied to the linear electric motors at the outlet of the stretching frame and the frequency of the alternating current supplied to the linear motors at the inlet of the stretching frame. The stretch ratio in TD can be considered as a first approximation equivalent to the ratio between the width of the film at the outlet of the stretching frame and the width of the film at the inlet of the stretching frame.

The outer layer, and optionally also the inner layer, is subjected to surface treatments in order to facilitate good anchoring of the glue to the film.

The surface treatment may be corona, flame or plasma type.

As mentioned, the films according to the invention enable a somewhat higher number of windows to be obtained for envelopes than polystyrene polymers per unit of polymer weight. This leads to the use of lower quantities of plastic materials, reducing on one hand the energy consumption required for their production and, on the other hand, reducing the amount of $CO_2$ produced and therefore lower global warming potential (GWP).

Polymerization for obtaining (co)polymers can be performed by operating with the suspension technique, in an inert diluent, in emulsion or in gaseous phase, with temperatures generally in the range from 0°C to 150°C at pressures generally in the range from 1 to 300 bar, optionally using a molecular weight regulator, for example, hydrogen. Polymerization using metallocenes may be carried out using catalysts comprising the reaction product of:

1) a bis-cyclopentadienyl derivative containing groups with oxygen linked to the transition metal, chosen from group IIIb to group Vb or the series of lanthanides from the periodic table of the elements;
2) a cocatalyst chosen from alumoxanes.

Polymerisation technology with metallocenes is well known in the art and should be referred to for the operational details.

A further object of the invention comprises the use of the films according to the invention for obtaining anti-reflective transparent windows for envelopes, postal products, etc. with a percentage of production waste lower than 0.002%, preferably lower than 0.001%, using applicators having an application speed between 1,000 and 1,300 envelopes/minute.

The practical result obtained with the film according to the invention shows that with an applicator that produces 1,200 envelopes/minute, the waste is lower than 12 envelopes in 8 operating hours. Therefore, in a 24-hour production cycle, the waste is lower than 36 envelopes.

In the process according to the present invention, the waste is preferably lower than 6 envelopes in 8 hours and 18 envelopes in 24 hours.

The Applicant has unexpectedly and surprisingly found that operating with these films, according to the Applicant's non-binding interpretation of the present invention, there are no preferential directions in which the cut can be made, and in this way there is substantially no waste.

Applicators do not require any modifications for the use of the films according to the present invention with respect to the films currently used on the market.

As mentioned, this leads to notable advantages from an industrial point of view in relation to sustainability since waste disposal is notably reduced with respect to the polyolefin films described for this application in the known art.

A further object of the present invention also relates to envelopes provided with anti-reflective transparent windows, wherein said windows are produced with the films according to the present invention.

EXAMPLES

Tear resistance

The determination is performed with an Elmendorf pendulum according to ASTM D 1424.

Melting point of the polymers

The melting point was determined using DSC.

Heat shrinkage of the film

The heat shrinkage of the film is determined according to standard OPMA TC 4 by heating the sample having dimensions 20 cm x 1 cm at 130°C for 5 minutes in air.

The heat shrinkage in MD or TD is calculated with the following formula:

$$\frac{(L1 - L2) \times 100}{L1}$$

wherein:

L1 is the length of the film prior to the heat treatment;
L2 is the length of the film after the heat treatment.

The heat shrinkage can also be indicated with the number obtained in the previous equation preceded by the negative sign (-).

Extractables in n-hexane

Determined according to standard FDA 177 - 1520.

Melt flow index

The determination is performed according to ASTM D1238, at 230°C for 10 min with a load of 2.16 kg both in MD and TD direction.

**EXAMPLE 1**

A 3-layer film was prepared by extrusion composed as follows:

- <u>inner layer</u> corresponding to the "glossy layer" in contact with the contents of the envelope, with a thickness of 0.7 μm, consisting of (% by weight):
- 95% terpolymer 03/02/04 LyondelBasell®: Adsy15C30F®, wherein the total quantity of C2 and C4 is less than 20% by weight;
- 5% slip agent masterbatch CONSTAB® SAAB 6552.
- <u>outer layer</u>, corresponding to the "matt layer" i.e. the visible side of the envelope window having a thickness of 1.7 μm, consisting of (% by weight):
- 98% matting agent masterbatch Ampacet® Matif 400219 (matt) formed by a mixture of a C3/C2/C4 propylene copolymer as described for the inner layer with HDPE 40% by weight out of the mixture,
- 2% slip agent masterbatch CONSTAB® AB6084, wherein the masterbatch polymer is a propylene homopolymer;
- <u>central layer</u> having a thickness of 20.7 μm, consisting of (% by weight):
- 88.45% homopolymer PP LyondelBasell® HP520H,
- 1.55% anti-static agent masterbatch Ampacet® wherein the polymer is a propylene (co)polymer,
- 10% PP reclaim,

The total thickness of the film is 23.1 μm.
The total hourly capacity of the three extruders is 1998 kg/h.
The production speed of the film is 250 m/min.
The film was obtained using a flat-die simultaneous biaxial Filming process, which consists of the following steps:

- extrusion of a three-layer sheet,
- cooling and tempering of the sheet,
- pre-heating in an IR battery,
- stretching in a LISIM® simultaneous stretching oven,
- corona treatment,
- winding the film onto the mother roll, which is then cut into the final rolls which have the dimensions required by the application.

The details of the individual steps are reported below.

<u>Extrusion of a three-layer sheet</u>

The inner layer was produced with a single screw extruder whose operating conditions are as follows:

capacity: 61.4 kg/h,
temperature of the screw feeding zone: 50°C,
temperature range: 235°C-250°C,
temperature of the filtration and transport line of the melt to the die: 255°C, screw rotation speed: 9 rpm.

The outer layer was produced with a single screw extruder whose operating conditions are as follows:

capacity: 145.4 kg/h
screw feeding zone: 50°C,
temperature range: 275°C-285°C,
temperature of the filtration and transport line of the melt to the die: 290°C,
screw rotation speed: 21 rpm.

The central layer was produced with a double screw extruder equipped with a gear pump for the melt whose operating conditions are as follows:

total capacity: 2,168 kg/h,
incoming granule flow rate (excluding recycled material): 1,791 kg/h,
extruder temperature range: 240°C - 260°C,
temperature of the melt pump: 255°C,

temperature of the filtration and transport line of the melt: 250°C before the filter, 257°C on the filter, 252°C - 237°C after the filter,

rotation speed of the double screw extruder = 145 rpm, pump rotation speed = 35 rpm.

The three independent polymer flows were superimposed in a flat die at T=250°C, so as to obtain a three-layer coextruded film.

Cooling and tempering

After extrusion through the flat die, the three-layer film was cooled and solidified on a roller provided with a gap in which water flows at the temperature of 30°C, rotating at the linear speed of 40 m/min, and immersed in a bath in which water circulates at the temperature of 30°C. The solidified film is known as "cast" film.

Preheating with IR

The cast film, at the speed of 40 m/min, was heated in a battery of IR panels whose temperature range is 220-350°C.

Filming in a LISIM® simultaneous stretching oven.

The cast film preheated with IR was stretched in a LISIM® simultaneous stretching oven, with the following process conditions:

stretch ratio in MD: 6.20.
stretch ratio in TD: 6.86.

Under these conditions value (a) equals 10.6.

Temperature profile in the preheating zone: 170°C-173°C-171°C.
Temperature in the biaxial stretching zone: 158°C.
Temperature profile in the annealing zone: 160°C-166°C-164°C.

Corona treatment and winding the film onto the mother roll

At the oven outlet the film was subjected to a corona treatment on the matt side, so as to obtain a surface energy value of 54 dyne/cm.

It was then wound onto the mother roll.

The film obtained is an isotropic film as shown by the shear strength (tear resistance) that has substantially the same value both in the MD and the TD direction.

The tear resistance in MD is 5 cN, in TD it is 4.4 cN and their ratio is 1.14.

**EXAMPLE 2**

A 3-layer film was prepared by extrusion composed as follows:

The inner and outer layer have the same composition as the corresponding values of the film in Example 1.

The central layer has the same film composition as the film in Example 1 but the thickness is 23.36 $\mu$m.

The total thickness of the film is 25.76 $\mu$m.

The total hourly capacity of the three extruders is 2,211 kg/h.

The production speed of the film is 250 m/min.

The film was obtained using a simultaneous biaxial film stretching process with a flat die, which consists of the following steps:

- extrusion of a three-layer sheet,
- cooling and tempering of the sheet,
- pre-heating in an IR battery,

- stretching in a LISIM® simultaneous stretching oven,
- corona treatment,
- winding the film onto the mother roll, which is then cut into the final rolls which have the dimensions required by the application.

The details of the individual steps are reported below.

Extrusion of a three-layer sheet

The inner layer was produced with a single screw extruder whose operating conditions are as follows:

capacity: 61.4 kg/h,
temperature of the screw feeding zone: 50°C,
temperature range: 235°C-250°C,
temperature of the filtration and transport line of the melt to the die: 255°C,
screw rotation speed: 9 rpm.

The outer layer was produced with a single screw extruder whose operating conditions are as follows:

capacity: 145.4 kg/h
screw feeding zone: 50°C,
temperature range: 275°C-285°C,
temperature of the filtration and transport line of the melt to the die: 290°C,
screw rotation speed: 22 rpm.

The central layer was produced with a double screw extruder equipped with a gear pump for the melt whose operating conditions are:

total capacity: 2,211 kg/h,
incoming granule flow rate: 2,004 kg/h,
extruder temperature range: 240°C-260°C,
temperature of the melt pump: 255°C,
temperature of the filtration and transport line of the melt: 250°C before the filter, 257°C on the filter, 252°C - 237°C after the filter,
double screw rotation speed: 163 rpm,
pump rotation speed: 39 rpm.

The three independent polymer flows were superimposed in a flat die at T=250°C, so as to obtain a three-layer coextruded film.

Cooling and tempering

After extrusion through the flat die, the three-layer film was cooled and solidified on a roller provided with a gap in which water flows at the temperature of 30°C, rotating at the linear speed of 40 m/min, and immersed in a bath in which water circulates at the temperature of 30°C.

Preheating with IR

The film at the speed of 40 m/min was heated in a battery of IR panels whose temperature range is 240-370°C.

Filming in a LISIM® simultaneous stretching oven

The cast preheated with IR was coated in a LISIM® simultaneous stretching oven, with the following process conditions:

stretch ratio in MD: 6.20.
stretch ratio in TD: 6.86.

Under these conditions value (a) is 10.6.

Temperature profile in the preheating zone: 173°C-176°C-174°C.
Temperature set of the biaxial stretching zone: 159°C.
Temperature profile of the annealing zone: 161°C-167°C-165°C.

Corona treatment and winding onto the mother roll

At the oven outlet the film was subjected to a corona treatment on the outer layer, so as to obtain a surface energy value of 54 dyne/cm.
The film was then wound onto the mother roll.
The film is isotropic as shown by the shear strength that has substantially the same value both in the MD and the TD direction.
The tear resistance in MD is 5.7 cN, in TD it is 5.3 cN and their ratio is 1.08.

**EXAMPLE 3 COMPARATIVE**

Example 1 was repeated but the film has a thickness of 35 micron and was prepared using a sequential stretching machine with a stretching ratio in MD of 5.0 and in TD of 7.5.
Under these conditions value (a) is 40%.
The film obtained is not an isotropic film as shown by the shear strength that has a lower value in the MD direction than in the TD direction.
The tear resistance in MD is 10 cN, in TD it is 6.6 cN and their ratio is 1.52 which indicates that the film is not isotropic in relation to tear resistance.

**EXAMPLE 4 APPLICATION**

The rolls used have a width of 120 mm and were cut during application to a length of 120 mm.
The film of Example 1 was used on a Winker-Dunnebier AG 102 RE machine which produces windows for envelopes in which the visible part of the window has the dimensions 100x45 mm and the window has total dimensions 120x65mm, the matt side being fixed to the envelopes using Eukalin 6415 EF glue sold by Henkel. The machine produces 1300 envelopes/minute. In 24 hours two envelopes were rejected.

**EXAMPLE 5 APPLICATION**

Example 4 Application was repeated but using the film of Example 2. The results are substantially equal to those obtained in Example 4 Application.

**EXAMPLE 5 COMPARATIVE APPLICATION**

Example 4 Application is repeated but using the film of Example 3 Comparative. The results showed a clearly higher level of waste, equal to 135 envelopes in 24 hours.

**Claims**

1. Multi-layer polyolefin films for envelope windows, comprising at least three layers wherein the central layer comprises a propylene homopolymer; the layer of film on the outer part of the envelope is based on propylene copolymers in mixture with HDPE, HDPE being comprised between 40 and 50% by weight of the mixture; the inner layer in contact with the contents of the envelope is based on propylene copolymers,
   the film being isotropic in relation to shear strength.

2. The film according to claim 1, wherein the central layer is a propylene homopolymer containing a concentration of extractables in n-hexane (50°C for two hours) lower than 10%.

3. The film according to claim 1 or 2, wherein the copolymers of the outer layer are based on polypropylene with at least one other comonomer containing at least one ethylenic unsaturation, said comonomer being selected among ethylene and alpha-olefins, linear or when possible branched, having 2 carbon atoms or a variable number from 4 to 12, the total quantity of comonomers being comprised between 0.5 and 25% by weight out of the total monomers, the outer layer comprising HDPE as a matting agent in a quantity of 40 - 50% by weight.

4. The film according to claim 3, wherein the comonomer is ethylene.

5. The film according to claim 3 or 4, wherein ethylene (% by weight) is lower than 10% and the alpha-olefin monomer is comprised between 0 and 10%.

6. The film according to any one of claims 1-5, wherein the monomers of the propylene-based copolymers of the inner layer are chosen from ethylene and alpha-olefins, linear or when possible branched, having a variable number of carbon atoms in a chain from 4 to 12, the quantity of ethylene and alpha-olefin comonomers being lower than 20% by weight out of the total polymer.

7. The film according to claim 6, wherein a propylene/ethylene/butene terpolymer is used wherein the quantity of ethylene and butene is <10%.

8. The film according to any one of claims 1-7 wherein the inner and outer layer contain optional components chosen from slip agents, anti-blocking agents and the core optionally contains anti-static agents and/or polyolefin copolymers.

9. The film according to any one of claims 1-8, wherein the propylene-based olefin copolymers according to claim 3 or ethylene copolymers with one or more linear or branched alpha-olefins with 3 to 20 carbon atoms are added in the core, optionally in presence of other comonomers containing more than one double bond in addition to the alpha-olefin bond, conjugated or not, with 4 to 20 carbon atoms or cyclic wherein the ring has 5 or 6 carbon atoms, the total quantity of comonomers (% in moles) being comprised between 5 and 50%, the number average molecular weight preferably being comprised between 300 and 25,000.

10. The film according to claim 9, wherein the quantity of copolymers in the core (% by weight) varies between 0 and 20%, with respect to the quantity of propylene homopolymers of the film or of the core.

11. The film according to any one of claims 1-10, wherein the films are bioriented.

12. The multi-layer film according to any one of claims 1-11, wherein the thickness of the multi-layer film is comprised between 15 and 40 $\mu$m, the central layer has a thickness of 12-38 $\mu$m, the inner layer and the outer layer have a thickness in the range 0.3-4 $\mu$m, the same or different from each other.

13. The process to obtain the film according to any one of claims 1-11, comprising the following steps:

   - coextruding a multi-layer sheet of the film according to the invention, with a thickness preferably comprised between about 0.5 mm and about 4 mm;
   - cooling the sheet on the surface of a cooled chill roll immersed in a water bath preferably at a temperature comprised between 5 and 35°C;
   - heating the sheet preferably using infrared radiation units wherein the surface of the IR panels has a temperature comprised between 100°C and 500°C;
   - stretching and orienting the sheet, obtaining the multi-layer film with a simultaneous orientation process by gripping the edges of the sheet, which have a higher thickness than the sheet, with a series of grippers/clamps independently guided by linear synchronous induction motors, wherein the assembly of grippers/clamps slides on diverging stretching tracks;

   the linear synchronous induction motors being powered with alternating currents whose phases and frequencies are modulated so that the grippers/clamps follow a pre-programmed linear speed to obtain the required stretch ratios in MD;
   wherein the MD stretch ratios are a function of the longitudinal linear speed profile and the TD stretch ratios are regulated by the distance (divergence) between the stretching rails;
   wherein the stretching frame used for the film stretching steps comprises one or more sections which are located inside an oven having a temperature comprised between about 150°C and 190°C; maintaining longitudinal stretch ratios MD comprised between 5.9 and 8 and transversal stretching ratios TD between 5.5 and 8, operating so that the inequality (a)

$$|(ratio(MD) - ratio(TD)| / (\wedge(ratio(MD), ratio(TD)) < 13\% \quad (a)$$

wherein:

ratio(MD) is the stretching ratio in MD and ratio(TD) is the stretching ratio in TD
is satisfied,
- final heat setting in TD performed using convergence of the stretching tracks in one or more sections of the stretching frame at temperatures of about 130°C-140°C and heat setting in MD obtained by reducing the linear speed of the grippers.

14. A use of the film according to any one of claims 1-12 for obtaining anti-reflective transparent windows for envelopes, postal products, etc. with a percentage of application waste lower than 0.002%, using applicators having an application speed comprised between 1,000 and 1,300 envelopes/minute.

15. Envelopes provided with anti-reflective transparent windows, wherein said windows are formed by a film according to any one of claims 1 - 12.

**Patentansprüche**

1. Mehrschichtige Polyolefinfilme für Umschlagfenster, die mindestens drei Schichten umfassen, wobei die mittlere Schicht ein Propylenhomopolymer umfasst; die Filmschicht auf dem äußeren Teil des Umschlags auf Basis von Propylencopolymeren in Mischung mit HDPE ist, wobei HDPE zwischen 40 und 50 Gew.-% der Mischung liegt; die innere Schicht, die mit dem Inhalt des Umschlags in Kontakt ist, auf Basis von Propylencopolymeren ist, wobei der Film in Bezug auf die Scherfestigkeit isotrop ist.

2. Film nach Anspruch 1, wobei die mittlere Schicht ein Propylenhomopolymer ist, das eine Konzentration an extrahierbaren Stoffen in n-Hexan (50 °C für zwei Stunden) von weniger als 10% enthält.

3. Film nach Anspruch 1 oder 2, wobei die Copolymere der äußeren Schicht auf Basis von Polypropylen mit mindestens einem anderen Comonomer sind, das mindestens eine ethylenische Ungesättigtheit enthält, wobei das Comonomer aus Ethylen und Alpha-Olefinen, linear oder, wenn möglich, verzweigt, mit 2 Kohlenstoffatomen oder einer variablen Zahl von 4 bis 12 ausgewählt wird, wobei die Gesamtmenge an Comonomeren zwischen 0.5 und 25 Ges.-% der Gesamtmonomere liegt, wobei die äußere Schicht HDPE als Mattierungsmittel in einer Menge von 40 - 50 Gew.-% umfasst.

4. Film nach Anspruch 3, wobei das Comonomer Ethylen ist.

5. Film nach Anspruch 3 oder 4, wobei Ethylen (Gew.-%) weniger als 10% ist und das Alpha-Olefinmonomer zwischen 0 und 10% liegt.

6. Film nach einem der Ansprüche 1-5, wobei die Monomere der propylenbasierten Copolymere der inneren Schicht aus Ethylen und Alpha-Olefinen, linear oder, wenn möglich, verzweigt, mit einer variablen Anzahl von Kohlenstoffatomen in einer Kette von 4 bis 12 ausgewählt werden, wobei die Menge an Ethylen- und Alpha-Olefincomonomeren weniger als 20 Gew.-% des Gesamtpolymers ist.

7. Film nach Anspruch 6, wobei ein Propylen/Ethylen/Buten-Terpolymer verwendet wird, wobei die Menge an Ethylen und Buten <10% ist.

8. Film nach einem der Ansprüche 1-7, wobei die innere und die äußere Schicht optionale Komponenten enthalten, die aus Gleitmitteln, Antiblockmitteln ausgewählt werden und der Kern gegebenenfalls Antistatikmittel und/oder Polyolefincopolymere enthält.

9. Film nach einem der Ansprüche 1-8, wobei die propylenbasierten Olefincopolymere nach Anspruch 3 oder Ethylencopolymere mit einem oder mehreren linearen oder verzweigten Alpha-Olefinen mit 3 bis 20 Kohlenstoffatomen in den Kern zugesetzt werden, gegebenenfalls in Gegenwart anderer Comonomere, die mehr als eine Doppelbindung, neben der Alpha-Olefinbindung, konjugiert oder nicht, mit 4 bis 20 Kohlenstoffatomen oder zyklisch, enthalten, wobei der Ring 5 oder 6 Kohlenstoffatome aufweist, die Gesamtmenge an Comonomeren (% in Molen) zwischen 5 und 50% liegt und das zahlenmittlere Molekulargewicht vorzugsweise zwischen 300 und 25.000 liegt.

10. Film nach Anspruch 9, wobei die Menge an Copolymere im Kern (Gew.-%) zwischen 0 und 20 % variiert, bezogen auf die Menge an Propylenhomopolymere des Films oder des Kerns.

11. Film nach einem der Ansprüche 1-10, wobei die Filme biorientiert sind.

12. Mehrschichtiger Film nach einem der Ansprüche 1-11, wobei die Dicke des mehrschichtigen Films zwischen 15 und 40 $\mu$m liegt, die mittlere Schicht eine Dicke von 12-38 $\mu$m aufweist, die innere Schicht und die äußere Schicht eine Dicke im Bereich von 0,3-4 $\mu$m aufweisen, die gleich oder verschieden voneinander ist.

13. Verfahren zum Erhalten des Films nach einem der Ansprüche 1-11, umfassend die folgenden Schritte:

- Coextrudieren eines mehrschichtigen Blattes des Films nach der Erfindung mit einer Dicke, die vorzugsweise zwischen etwa 0,5 mm und etwa 4 mm liegt;
- Kühlen des Blattes auf der Oberfläche einer gekühlten Kühlwalze, das in einem Wasserbad eingetaucht wird, vorzugsweise bei einer Temperatur zwischen 5 und 35 °C;
- Erwärmen des Blattes vorzugsweise unter Verwendung von Infrarot-Strahlungseinheiten, wobei die Oberfläche der IR-Paneele eine Temperatur zwischen 100 °C und 500 °C aufweist;
- Strecken und Ausrichten des Blattes, Erhalten des mehrschichtigen Films bei gleichzeitigem Ausrichtungsprozess durch Greifen der Kanten des Blattes, die eine höhere Dicke als das Blatt aufweisen, mit einer Reihe von Greifern/Klemmen, die unabhängig voneinander von linearen synchronen Induktionsmotoren geführt werden, wobei die Gruppe von Greifern/Klemmen auf divergierenden Streckbahnen gleitet;

wobei die linearen synchronen Induktionsmotoren mit Wechselströmen betrieben werden, deren Phasen und Frequenzen so moduliert sind, dass die Greifer/Klemmen einer vorprogrammierten linearen Geschwindigkeit folgen, um die erforderlichen Streckverhältnisse in MD zu erhalten;

wobei die MD-Streckverhältnisse eine Funktion des linearen Längsgeschwindigkeitsprofils sind und die TD-Streckverhältnisse durch den Abstand (Divergenz) zwischen den Streckschienen reguliert werden;

wobei der für die Filmstreckschritte verwendete Streckrahmen einen oder mehrere Abschnitte umfasst, die sich innerhalb eines Ofens mit einer Temperatur zwischen etwa 150 °C und 190 °C befinden, wobei die MD-Längsstreckverhältnisse zwischen 5,9 und 8 und die TD-Querstreckverhältnisse zwischen 5,5 und 8 behalten werden, die so arbeiten, dass die Ungleichheit (a)

$$|(Verhältnis(MD)-$$

$$Verhältnis(TD)|/(\wedge(Verhältnis(MD),Verhältnis(TD))<\ 13\%$$

$$(a)$$

wobei

Verhältnis(MD) ist das Streckverhältnis in MD und Verhältnis(TD) ist das Streckverhältnis in TD erfüllt wird,

- Endthermofixieren in TD, das unter Verwendung der Konvergenz der Streckbahnen in einem oder mehreren Abschnitten des Streckrahmens bei Temperaturen von etwa 130 °C-140 °C durchgeführt wird und Thermofixieren in MD, das durch Verringerung der linearen Geschwindigkeit der Greifer erzielt wird.

14. Verwendung des Films nach einem der Ansprüche 1-12 zum Erhalten von entspiegelten transparenten Fenstern für Briefumschläge, Postprodukte usw. mit einem Auftragsausschussprozentsatz von weniger als 0,002%, unter Verwendung von Applikatoren mit einer Auftragsgeschwindigkeit zwischen 1.000 und 1.300 Briefumschläge/Minute.

15. Umschläge, die mit entspiegelten, transparenten Fenstern versehen sind, wobei die Fenster durch einen Film nach einem der Ansprüche 1-12 gebildet werden.

**Revendications**

1. Films de polyoléfine multicouche pour enveloppes à fenêtre, comprenant au moins trois couches dans lesquels la couche centrale comprend un homopolymère de propylène ; la couche de film sur la partie extérieure de l'enveloppe est à base de copolymères de propylène mélangés à du PEHD, le PEHD étant compris entre 40 et 50 % en poids du mélange ; la couche intérieure en contact avec le contenu de l'enveloppe est à base de copolymères de propylène, le film étant isotrope en ce qui concerne sa résistance au cisaillement.

2. Film selon la revendication 1, dans lequel la couche centrale est un homopolymère de propylène contenant une concentration d'extractibles en n-hexane (50 °C pendant deux heures) inférieure à 10 %.

3. Film selon la revendication 1 ou 2, dans lequel les copolymères de la couche extérieure sont à base de polypropylène avec au moins un autre comonomère contenant au moins une insaturation éthylénique, ledit comonomère étant sélectionné parmi l'éthylène et les alpha-oléfines, linéaires ou quand cela est possible ramifiés, comportant 2 atomes de carbone ou un nombre variable compris entre 4 et 12, la quantité totale de comonomères étant comprises entre 0,5 et 25 % en poids du total de monomères, la couche extérieure comprenant du PEHD comme étant un agent de matité dans une quantité comprise entre 40 - 50 % en poids.

4. Film selon la revendication 3, dans lequel le comonomère est de l'éthylène.

5. Film selon la revendication 3 ou 4, dans lequel l'éthylène (% en poids) est inférieur à 10 % et le monomère alpha-oléfine est compris entre 0 et 10 %.

6. Film selon l'une quelconque des revendications de 1 à 5, dans lequel les monomères des copolymères à base de propylène de la couche intérieure sont choisis à partir d'éthylène et d'alpha-oléfines, linéaires ou quand cela est possible ramifiés, comportant un nombre variable d'atomes de carbone dans une chaîne allant de 4 à 12, la quantité de comonomères d'éthylène et d'alpha-oléfine étant inférieure à 20 % en poids du poids total en polymères.

7. Film selon la revendication 6, dans lequel un terpolymère de propylène/éthylène/butène est utilisé dans lequel la quantité d'éthylène et de butène est < 10 %.

8. Film selon l'une quelconque des revendications de 1 à 7, dans lequel les couches intérieure et extérieure contiennent des composants facultatifs choisis à partir d'agents de glissance, d'agents antiadhérents et l'âme contient facultativement des agents antistatiques et/ou des copolymères de polyoléfine.

9. Film selon l'une quelconque des revendications de 1 à 8, dans lequel les copolymères oléfines à base de propylène selon la revendication 3 ou les copolymères d'éthylène ayant un ou plusieurs alpha-oléfines linéaires ou ramifiés ayant de 3 à 20 atomes de carbone sont ajoutés dans l'âme, facultativement en présence d'autres comonomères contenant plus d'une liaison double en plus de la liaison alpha-oléfine, conjuguée ou non, avec 4 à 20 atomes de carbone ou cyclique dans lequel le cycle comporte 5 ou 6 atomes de carbone, la quantité totale de comonomères (% en moles) étant comprise entre 5 et 50 %, la masse moléculaire moyenne en nombre étant de préférence comprise entre 300 et 25 000.

10. Film selon la revendication 9, dans lequel la quantité de copolymères dans l'âme (% en poids) varie entre 0 et 20 % par rapport à la quantité de homopolymères de propylène du film ou de l'âme.

11. Film selon l'une quelconque des revendications de 1 à 10, dans lequel les films sont biorientés.

12. Film multicouche selon l'une quelconque des revendications de 1 à 11, dans lequel l'épaisseur du film multicouche est comprise entre 15 et 40 $\mu$m, la couche centrale ayant une épaisseur comprise entre 12-38 $\mu$m, la couche intérieure et la couche extérieure ayant une épaisseur comprise entre 0,3 et 4 $\mu$m, identique ou différente l'une de l'autre.

13. Procédé pour obtenir le film selon l'une quelconque des revendications de 1 à 11, comprenant les étapes suivantes:

   - coextruder une feuille multicouche du film selon la présente invention, avec une épaisseur de préférence comprise entre environ 0,5 mm et environ 4 mm ;
   - refroidir la feuille sur la surface d'un rouleau refroidisseur immergé dans un bain d'eau de préférence à une température comprise entre 5 et 35 °C ;
- chauffer la feuille de préférence en utilisant des unités à rayonnement infrarouge dans lequel la surface des panneaux IR a une température comprise entre 100 et 500 °C ;
- étirer et orienter la feuille en obtenant le film multicouche, avec un processus d'orientation simultanée en saisissant les bords de la feuille, ayant une épaisseur supérieure à la feuille, par le biais d'une série de préhenseurs/pinces guidés de façon indépendante par des moteurs à induction linéaire synchrones, dans lequel l'ensemble des préhenseurs/pinces coulisse sur des pistes d'étirement divergentes;

les moteurs à induction linéaire synchrones étant alimentés par des courants alternatifs dont les phases et les fréquences sont modulés de manière à ce que les préhenseurs/pinces suivent une vitesse linéaire préprogrammée pour obtenir les rapports d'étirement requis en MD ;
dans lequel les rapports d'étirement en MD sont fonction du profil de la vitesse linéaire longitudinale et les rapports d'étirement en TD sont réglés par la distance (divergence) entre les rails d'étirement ; dans lequel le châssis d'étirement utilisé pour les étapes d'étirement du film comprend une ou plusieurs sections étant situées à l'intérieur d'un four ayant une température comprise entre environ 150 et 190 °C ; en maintenant les rapports d'étirement longitudinal en MD compris entre 5,9 et 8 et les rapports d'étirement transversal en TD entre 5,5 et 8, et en opérant de sorte que l'inégalité (a)

$$|(rapport(MD)-rapport(TD)|/(\wedge(rapport(MD),rapport(TD))<$$

$$13 \% \ (a)$$

où :

le rapport(MD) est le rapport d'étirement en MD et le rapport (TD) est le rapport d'étirement en TD soit satisfaite,
- réglage de la température finale en TD effectué en utilisant la convergence des pistes d'étirement dans une ou plusieurs sections du châssis d'étirement à des températures d'environ 130 °C-140 °C et réglage de la température en MD obtenu en réduisant la vitesse linéaire des préhenseurs.

14. Utilisation du film selon l'une quelconque des revendications de 1 à 12, pour obtenir des fenêtres antireflet transparentes pour des enveloppes, des produits postaux etc. , avec un pourcentage de rebut en cours d'application inférieur à 0,002 %, en utilisant des applicateurs ayant une vitesse d'application comprise entre 1 000 et 1 300 enveloppes/minute.

15. Enveloppes pourvues de fenêtres antireflet transparentes, dans lesquelles lesdites fenêtres sont formées par un film selon l'une quelconque des revendications de 1 à 12.

**EP 3 120 989 B1**

### REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2832541 A
- DE 102007048090 A1
- EP 2599628 A
- US 4853602 A
- US 5051225 A

**15**